# EUROPÄISCHE PATENTSCHRIFT

(11) **EP 3 482 186 B1**
(45) Veröffentlichungstag und Bekanntmachung des Hinweises auf die Patenterteilung: **18.03.2020**
(21) Anmeldenummer: 17740659.2
(22) Anmeldetag: 05.07.2017
(51) Int. Cl.: G01M 17/007

(54) **VERFAHRBARE PLATTFORM MIT EINEM VERFORMBAREN GRUNDKÖRPER ZUM TESTEN VON KOLLISIONEN ODER KOLLISIONSNAHEN SITUATIONEN**
MOVABLE PLATFORM WITH A DEFORMABLE MAIN BODY FOR THE TESTING OF COLLISIONS OR NEAR-COLLISION SITUATIONS
PLATE-FORME DÉPLAÇABLE COMPRENANT UN CORPS DE BASE DÉFORMABLE POUR TESTER DES COLLISIONS OU DES SITUATIONS PROCHES DE COLLISIONS

(30) Priorität: 06.07.2016 DE 102016112422
(43) Veröffentlichungstag der Anmeldung: 15.05.2019
(73) Patentinhaber: 4activeSystems GmbH, 8772 Traboch (AT)
(72) Erfinder: HAFELLNER, Reinhard, 8724 Spielberg (AT); FRITZ, Martin, 8723 Kobenz (AT)
(74) Vertreter: Dilg, Haeusler, Schindelmann Patentanwaltsgesellschaft mbH
(86) Internationale Anmeldenummer: PCT/EP2017/066793
(87) Internationale Veröffentlichungsnummer: WO 2018/007455

(56) Entgegenhaltungen:
- DE-U1- 9 103 575
- GB-A- 2 496 442

## Beschreibung

### Technisches Gebiet

Die vorliegende Erfindung betrifft Plattformen zum Testen von Kollisionen oder kollisionsnahen Situationen zwischen einem Kollisionskörper, insbesondere einem Fahrzeug, und einem Testobjekt, sowie ein Verfahren zum Herstellen von Plattformen.

### Hintergrund der Erfindung

In der modernen Fahrzeugtechnik kommen mehr und mehr Assistenzsysteme zum Einsatz, welche aktiv die Umgebung des Fahrzeugs überwachen und passiv oder aktiv in die Steuerung des Fahrzeugs eingreifen. Assistenzsysteme müssen daher vollumfänglichen Tests unterzogen werden, um Fehleinschätzungen der Assistenzsysteme zu unterbinden.

Zum Testen von modernen Assistenzsystemen werden Kollisionen oder kollisionsnahe Situationen zwischen dem zu testenden Fahrzeug und einem Testobjekt herbeigeführt. Für eine Kollision zwischen einem Fahrzeug und einem Testobjekt wird beispielsweise das Fahrzeug oder das Testobjekt an einer bestimmten Position ruhend angeordnet und der Kollisionspartner auf eine bestimmte Geschwindigkeit beschleunigt. Um eine realitätsnahe Kollisionssituation herbeizuführen, wie beispielsweise eine Kollision zweier Fahrzeuge oder eines Fahrzeugs mit einer Person im Straßenverkehr, wird das Fahrzeug wie auch das Testobjekt in Bewegung versetzt, um eine Kollision oder eine kollisionsnahe Situation zu erzeugen. Dabei können insbesondere Fahrerassistenzsysteme realitätsnah getestet werden.

Um ein Assistenzsystem für alle denkbaren Situationen zu testen, ist es notwendig, dass das Fahrzeug wie auch das Testobjekt sich von Test zu Test aus verschiedensten Richtungen aufeinander zu bewegen. Um entsprechende Situationen effektiv zu Testen ist es notwendig, dass ein Testsystem schnell und ohne komplexe Umbauten an verschiedene Testsituationen angepasst werden kann. Hierfür ist es beispielsweise bekannt, Testobjekte, wie beispielsweise ein Dummy, auf eine verfahrbar Unterlage zu platzieren und die Unterlage beispielsweise mit Seilzugsystemen in eine Richtung zu ziehen, welche eine Fahrbahn eines Testfahrzeugs kreuzt.

Dabei ist es notwendig, dass die Bauteile und Vorrichtungen des Testsystems derart unscheinbar ausgebildet sind, dass das Testsystem nicht das Assistenzsystem während des Tests beeinflusst, da sonst keine realitätsnahen Versuche durchführbar sind.

### Darstellung der Erfindung

Es ist eine Aufgabe der vorliegenden Erfindung, eine kompakte, robuste und temperaturunabhängige verfahrbare Plattform für ein Testsystem zu schaffen.

Diese Aufgabe wird mit einer Plattform zum Testen von Kollisionen oder kollisionsnahen Situationen zwischen einem Kollisionskörper und einem Testobjekt sowie mit einem Verfahren zur Herstellung einer Plattform zum Testen von Kollisionen oder kollisionsnahen Situationen zwischen einem Kollisionskörper und einem Testobjekt gemäß den unabhängigen Ansprüchen gelöst.

Gemäß einem ersten Aspekt der vorliegenden Erfindung wird eine Plattform zum Testen von Kollisionen oder kollisionsnahen Situationen zwischen einem Kollisionskörper, insbesondere einem Fahrzeug, und einem Testobjekt beschrieben. Die Plattform weist einen Grundkörper, welcher eine Bodenfläche und eine gegenüber der Bodenfläche ausgebildete Befestigungsfläche aufweist, auf, wobei auf der Befestigungsfläche eine Befestigungsvorrichtung ausgebildet ist zum Befestigen des Testobjekts. Ferner weist die Plattform zumindest ein Rollenelement auf, welches an der Bodenfläche angeordnet ist, wobei das Rollenelement derart ausgebildet ist, dass der Grundkörper mittels des Rollenelements entlang eines Bodens verfahrbar ist. Der Grundkörper ist aus einem elastisch verformbaren Material mit einer Dichte unter 2500 kg/m³ ausgebildet.

Gemäß der vorliegenden Erfindung wird eine Plattform zum Testen von Kollisionen oder kollisionsnahen Situationen zwischen einem Kollisionskörper, insbesondere einem Fahrzeug, und einem Testobjekt beschrieben. Die Plattform weist einen Grundkörper, welcher eine Bodenfläche und eine gegenüber der Bodenfläche ausgebildete Befestigungsfläche aufweist, auf, wobei auf der Befestigungsfläche eine Befestigungsvorrichtung ausgebildet ist zum Befestigen des Testobjekts. Ferner weist die Plattform zumindest ein Rollenelement auf, welches an der Bodenfläche angeordnet ist, wobei das Rollenelement derart ausgebildet ist, dass der Grundkörper mittels des Rollenelements entlang eines Bodens verfahrbar ist. Die Plattform weist eine Trägerstruktur mit zumindest einem elastisch verformbaren Trägerelement auf, welches derart mit dem Grundkörper gekoppelt ist, dass, nach einer belastungsinduzierten Verformung des Grundkörpers, das Trägerelement den Grundkörper in eine belastungsfreie Ausgangsform zurückformt.

Gemäß einem weiteren Aspekt der vorliegenden Erfindung wird ein Testsystem zum Testen von Kollisionen oder kollisionsnahen Situationen zwischen einem Kollisionskörper, insbesondere einem Fahrzeug, und einem Testobjekt. Das Testsystem weist eine Plattform der oben beschriebenen Art und ein Testobjekt auf, wobei das Testobjekt auf der Befestigungsfläche mittels der Befestigungsvorrichtung befestigt ist.

Gemäß einem weiteren Aspekt der vorliegenden Erfindung wird ein Verfahren zum Herstellen einer Plattform zum Testen von Kollisionen oder kollisionsnahen Situationen zwischen einem Kollisionskörper, insbesondere einem Fahrzeug, und einem Testobjekt beschrieben. Gemäß dem Verfahren wird ein Grundkörper bereitgestellt, welcher eine Bodenfläche und eine gegenüber der Bodenfläche ausgebildete Befestigungsfläche aufweist, wobei auf der Befestigungsfläche eine Befestigungsvorrichtung ausgebildet ist zum Befestigen des Testobjekts. Ferner wird gemäß dem Verfahren zumindest ein Rollenelement an der Bodenfläche des Grundkörpers angeordnet, wobei das Rollenelement derart ausgebildet wird, dass der Grundkörper mittels des Rollenelements entlang eines Bodens verfahrbar ist. Der Grundkörper ist aus einem elastisch verformbaren Material mit einer Dichte unter 2500 kg/m³ ausgebildet. Zusätzlich wird eine Trägerstruktur mit zumindest einem elastisch verformbaren Trägerelement bereitgestellt, welches derart mit dem Grundkörper gekoppelt wird, dass, nach einer belastungsinduzierten Verformung des Grundkörpers, das Trägerelement den Grundkörper in eine belastungsfreie Ausgangsform zurückformt.

Der Kollisionskörper kann beispielsweise ein passiv und statisch vorliegendes Element wie beispielsweise eine Aufprallwand oder ein stehendes Objekt, wie beispielsweise ein Fahrzeug, darstellen. Alternativ kann der Kollisionskörper ein sich selbst bewegendes Objekt darstellen, wie beispielsweise ein Fahrzeug, wie beispielsweise ein PKW, Lkw, Bus oder Fahrrad.

Das Testobjekt, welches auf der Plattform befestigt ist, ist beispielsweise ein menschenähnlicher Dummy, welcher stehend, liegend oder sitzend auf der Plattform befestigt ist. Ferner kann das Testobjekt eine Fahrzeugattrappe oder eine Fahrradattrappe darstellen.

Das Testsystem weist die oben beschriebene Plattform und das Testobjekt auf. Die Plattform ist mit dem weiter untere näher beschriebenen Rollenelement verfahrbar entlang eines Bodens verfahrbar. Die Plattform, auf welcher das Testobjekt angeordnet ist, kann den Fahrweg des Kollisionskörpers kreuzen, sodass die Annäherung des Testobjekts an den Kollisionskörper mittels Fahrerassistenzsystemen gemessen werden kann und diese dabei getestet werden.

Die Plattform weist den Grundkörper auf, welcher eine plattenähnliche Form ausbildet. Dies bedeutet das seine Erstreckung innerhalb einer Bodenebene deutlich größer ist als seine Dicke in zum Beispiel vertikaler Richtung. Der Grundkörper weist dabei eine Bodenfläche und eine gegenüberliegende Befestigungsfläche auf. Der Grundkörper wird mit seiner Bodenfläche auf einem Boden aufgelegt. In der Bodenfläche ist das zumindest eine Rollenelement drehbar angeordnet, welche zumindest teilweise aus dem Grundkörper hinausragt und somit einen Abstand zwischen Grundkörper und Boden bereitstellt. Auf der Befestigungsfläche ist eine Befestigungsvorrichtung ausgebildet. Die Befestigungsvorrichtung ist konfiguriert um das Testobjekt zu fixieren. Ferner kann die Befestigungsvorrichtung steuerbar ausgebildet sein, um das Testobjekt selektiv, beispielsweise kurz vor einer Aufprallsituation, freizugeben, sodass die Befestigung zwischen dem Grundkörper und dem Testobjekt gelöst ist.

Die Befestigungsvorrichtung kann beispielsweise aus einem Hakensystem bestehen, in welches das Testobjekt eingehängt werden kann. Ferner kann die Befestigungsvorrichtung einen Magneten, insbesondere einen steuerbaren Elektromagneten, aufweisen, um mittels magnetischer Haltekraft das Testobjekt an der Befestigungsfläche zu befestigen.

An der Bodenfläche ist das zumindest eine Rollenelement angeordnet. In einer bevorzugten Ausführungsform können an dem Grundkörper drei oder vier Rollenelemente beabstandet zueinander an der Bodenfläche angeordnet sein. Somit ist eine hohe Rollstabilität und eine gute Steuerbarkeit der Plattform gegeben. Das Rollenelement kann beispielsweise aus Gummirollen, Hartplastikrollen oder Kunststoffrollen bestehen.

Die Plattform ist mittels dem zumindest einem Rollenelement entlang des Bodens verfahrbar. Dabei kann an dem Grundkörper ein Zugmechanismus, wie beispielsweise ein Zugseil oder eine Zugstange, befestigt sein, um die Plattform über dem Boden zu ziehen. Ferner kann der Grundkörper auf einer Führungsschiene befestigt sein, wobei der Grundkörper mit dem Rollenelement entlang der Führungsschiene verfahrbar ist. Ferner kann die Plattform frei verfahrbar ausgebildet sein, indem, wie weiter unten detaillierter beschrieben, dass Rollenelement selbst angetrieben wird und, gemäß einer beispielhaften Ausführungsform, lenkbar ausgebildet ist.

Um eine kompakte und gleichzeitig jedoch robuste Ausführung der Plattform bereitzustellen, wird gemäß der vorliegenden Erfindung vorgeschlagen den Grundkörper aus einem elastisch verformbaren Material mit einer Dichte unter 2500 kg/m³ ausgebildet und/oder eine Trägerstruktur mit zumindest einem elastisch verformbaren Trägerelement mit dem Grundkörper zu koppeln, sodass, nach einer belastungsinduzierten Verformung des Grundkörpers, das Trägerelement den Grundkörper in eine belastungsfreie Ausgangsform zurückformt.

Der Begriff "elastisch verformbar" beschreibt die Eigenschaft des Materials des Grundkörpers bzw. des Trägerelements, bei welcher der Grundkörper und das Trägerelement nach einer Verformung aufgrund einer bestimmten Krafteinwirkung zurück in ihren Ausgangszustand sich zurückformt. Der Ausgangszustand ist derjenige Zustand, in welchem der Grundkörper bzw. das Trägerelement ohne eine Verformungskraft (beispielsweise jegliche äußere Belastungskraft) vorliegt.

Der Grundkörper ist dabei derart ausgebildet, dass er in einem Zustand, in welchem er mit den Rollenelement auf dem Boden aufliegt und in welchem das Testobjekt auf der Befestigungsfläche befestigt ist, von dem Boden beabstandet ist. Dies bedeutet, dass lediglich das zumindest eine Rollenelement auf dem Boden aufliegt. Während eines Tests kann der Kollisionskörper über den Grundkörper fahren, sodass dieser sich verformt und punktuell oder vollflächig mit seiner Bodenfläche auf dem Boden aufliegt. Nachdem der Kollisionskörper über den Grundkörper gefahren ist, kann sich dieser wieder in die ursprüngliche Ausgangsposition zurück verformen.

Somit ist der Grundkörper und somit ist die gesamte Plattform sehr flach und robust ausgebildet, da der Grundkörper aufgrund seiner elastischen Eigenschaften nachgibt ohne zu brechen, wie es im Fall von steifen und rigiden Körpern der Fall wäre. Aufgrund der flachen Ausbildung des Grundkörpers wird darüber hinaus die Wahrnehmung von zu testenden Assistenzsystemen unterdrückt.

Das elastisch verformbare Material des Grundkörpers weist eine Dichte ungefähr unter 2500 kg/m³ (Kilogramm pro Kubikmeter) auf, insbesondere weniger 2000 kg/m^{3,} weniger als 1800 kg/m³, weniger als 1200 kg/m³ und/oder weniger als 800 kg/m³ auf. In einer beispielhaften Ausführungsform weist das elastisch verformbaren Material des Grundkörpers eine Dichte zwischen ungefähr 500 kg/m³ und ungefähr 2500 kg/m³, zwischen ungefähr 1000 kg/m³ und ungefähr 2000 kg/m³ oder ungefähr 1800 kg/m³ auf.

Gemäß einer weiteren beispielhaften Ausführungsform weist das Material einen E-Modul von weniger als ungefähr 60 GPa (bei 20° Grad Celsius) auf. Insbesondere weist das Material des Grundkörpers einen E-Modul von weniger als ungefähr 40 GPa, insbesondere weniger als ungefähr 20 GPa , weniger als ungefähr 15 GPa, weniger als ungefähr 10 GPa oder weniger als ungefähr 5 GPa (bei 20° Grad Celsius) auf. Je geringer das E-Modul, desto weniger steif und duktiler ist der Grundkörper.

Gemäß einer weiteren beispielhaften Ausführungsform weist der Grundkörper eine Dicke zwischen der Bodenfläche und der Befestigungsfläche von weniger als ungefähr 6 cm, insbesondere weniger als ungefähr 5 cm oder weniger als ungefähr 4 cm auf.

Die Dicke ist dabei der kürzeste Abstand zwischen der Bodenfläche und der Befestigungsfläche. Neben dem Bereich mit der geringsten Dicke kann der Grundkörper zusätzlich noch vereinzelt dickere Bereiche aufweisen, wie beispielsweise die unten beschriebenen Installationsboxen. Aufgrund der erfindungsgemäßen Auswahl der Dichte des Materials des Grundkörpers ist eine äußerst dünne Ausbildung, insbesondere geringer als 6 cm Dicke, möglich.

Gemäß einer weiteren beispielhaften Ausführungsform weist Grundkörper eine Druckfestigkeit von mindestens 0,5 MPa, insbesondere mindestens 1 MPa, auf. Somit weist der Grundkörper eine ausreichende Festigkeit auf, damit ein Fahrzeug bzw. ein LKW als Kollisionskörper über den Grundkörper fahren kann, ohne diesen plastisch bzw. irreversibel zu beschädigen. Gleichzeitig wird eine ausreichende elastische Verformbarkeit bereitgestellt.

Gemäß einer weiteren beispielhaften Ausführungsform ist das Material des Grundkörpers der Plattform ein organisches Material, d.h. ein Material, welches aus Kohlenstoff, Sauerstoff, Wasserstoff und Stickstoff-Verbindungen besteht. Das organische Material kann z.B. Kunststoff, insbesondere ein Faserverbundmaterial, sein. Dabei kann das Faserverbundmaterial beispielsweise Kohlefasern oder Glasfasern aufweisen, welche in Kunstharz oder einem anderem Matrixmaterial mit elastischen Eigenschaften ausgebildet sein. Beispielsweise kann das Kunststoffmaterial bzw. das Fasermaterial aus einem Elastomer, z.B. einem thermoplastischen Material, bestehen. Ferner kann das Material des Grundkörpers ein Gummi bzw. Hartgummimaterial sein. Ferner kann das organische Material ein Holzmaterial sein.

Gemäß einer weiteren beispielhaften Ausführungsform ist der Grundkörper aus einem Vollmaterial oder aus einer Sandwichstruktur hergestellt. Das Vollmaterial kann Poren, wie beispielsweise in einem (Hart-)Schaummaterial, oder Hohlräume, wie beispielsweise in einer Rippenstruktur aufweisen. Bei einem Sandwichmaterial werden kraftaufnehmende steife bzw. feste Decklagen eingesetzt, die durch einen leichten Kernwerkstoff auf Abstand gehalten werden. Der Kern kann auch eine wabenartige Innenstruktur aufweisen. Im Inneren können somit beispielsweise Zwischenräume vorhanden sein. Im Vollmaterial oder der Sandwichstruktur des Grundkörpers sind beispielsweise die unten erläuterten Installationsboxen ausgebildet.

Gemäß einer weiteren beispielhaften Ausführungsform weist die Plattform drei Rollenelemente auf, welche an der Bodenfläche beabstandet angeordnet sind, wobei die Rollenelemente derart ausgebildet sind, dass der Grundkörper mittels der Rollenelemente entlang eines Bodens verfahrbar ist.

Gemäß einer weiteren beispielhaften Ausführungsform bildet der Grundkörper einen dreieckigen, eine viereckigen, einen runden oder einen ovalen Grundriss aus. Ein dreieckiger Grundriss weist drei Eckbereiche auf. In jedem der Eckbereiche ist beispielsweise ein Rollenelement ausgebildet. Entsprechend weist ein viereckiger Grundriss vier Eckbereiche auf, wobei in jedem der Eckbereiche ein Rollenelement ausgebildet sein kann.

Gemäß einer weiteren beispielhaften Ausführungsform weist die Plattform eine Antriebseinheit auf, welche ausgebildet ist, das zumindest eine Rollenelement anzutreiben. Die Antriebseinheit kann einen Elektromotor darstellen. Beispielsweise kann jedem Rollenelement eine Antriebseinheit zugeordnet sein. Diese kann Beispiel direkt eine Achse des Rollenelements antreiben. Ferner kann eine zentrale Antriebseinheit in den Grundkörper installiert werden, wobei die zentrale Antriebseinheit beispielsweise mehrere Rollenelemente gleichzeitig antreibt.

Gemäß einer weiteren beispielhaften Ausführungsform ist die Antriebseinheit beabstandet zu dem zumindest einen Rollenelement angeordnet, wobei die Antriebseinheit insbesondere mittels eines Antriebsriemens, mittels Zahnradgetriebes, insbesondere eines Stirnradgetriebes und/oder als Direktantrieb mit dem Rollenelement zum Übertragen einer Antriebskraft gekoppelt ist. Die Kopplung kann auch mittels einer Antriebskette oder mittels einer Zahnradübersetzung bereitgestellt werden.

Gemäß einer weiteren beispielhaften Ausführungsform weist die Plattform ferner einen Lenkmechanismus auf, welcher ausgebildet ist, das zumindest eine Rollenelement zu lenken. Das Rollenelement kann beispielsweise schwenkbar an dem Grundkörper ausgebildet sein. Gemäß einer weiteren beispielhaften Ausführungsform weist der Lenkmechanismus einen Lenkmotor (z.B. Servomotor, Linearmotor) auf, welcher mit dem zumindest einen Rollenelement gekoppelt ist, um das Rollenelement zu lenken. Beispielsweise kann der Lenkmechanismus eine Lenkachse aufweisen, an welcher das Rollenelement schwenkbar befestigt ist. Ein Servomotor des Lenkmechanismus, welcher am Rollenelement oder zentral in dem Grundkörper angeordnet ist, kann nach Empfang entsprechender Steuerbefehle das Rollenelement um die Lenkachse steuern.

Gemäß einer weiteren beispielhaften Ausführungsform weist die Plattform eine Installationsbox aufweisend ein Installationsvolumen auf, welche in einer Aufnahmeöffnung des Grundkörpers angeordnet ist. Die Installationsbox weist eine Installationsöffnung auf, durch welche das Installationsvolumen von außen zugänglich ist. Die Installationsbox kann integral beispielsweise als Aussparung in dem Grundkörper ausgebildet werden. Ferner kann die Installationsbox eine selbsttragende Einheit bilden und in dem Grundkörper, bzw. in einer entsprechend dafür vorgesehene Aufnahmeöffnung, angeordnet werden. In dem Installationsvolumen der Installationsbox können ein oder mehrere funktionale Elemente der Plattform eingebaut werden. So können beispielsweise die Rollenelemente, Sensoren, Antriebseinheiten oder Steuereinheiten in der Installationsbox installiert werden.

Ferner können mehrere Installationsboxen angeordnet und in dem Grundkörper ausgebildet werden, um dort funktionale Elemente zu installieren. Die beabstandeten Installationsboxen können funktional, beispielsweise zum Datenaustausch, miteinander gekoppelt werden (beispielsweise über leitende Drähte oder Lichtwellenleiter).

Gemäß einer beispielhaften Ausführungsform ist die Installationsbox derart in der Aufnahmeöffnung des Grundkörpers vorgesehen, dass ein Temperierbereich der Installationsbox in Kontakt mit einer Umgebung des Grundkörpers ist. Der Temperierbereich ist aus einem Material ausgebildet, welches einen größeren Wärmeleitkoeffizienten aufweist als ein Material des Grundkörpers.

Der Temperierbereich der Installationsbox ist ein Bereich derselben, welcher in Kontakt mit der Umgebung des Grundkörpers, d.h. beispielsweise mit der Umgebungsluft des Grundkörpers in Kontakt ist. Somit kann die Umgebungsluft des Grundkörpers als Kühlmittel eingesetzt werden und der Temperierbereich Wärme aus dem Inneren der Installationsbox an die Umgebung abgeben. Somit wird insbesondere die Temperatur von funktionalen Einheiten in dem Installationsvolumen nach außen an die Umgebung über den Temperierbereich abgegeben.

Insbesondere ist der Temperierbereich aus einem Material ausgebildet, welches einen größeren Wärmeleitkoeffizienten als ein Material des Grundkörpers aufweist. Der Wärmeleitkoeffizienten beschreibt die Wärmeleitfähigkeit eines Materials. Die Wärmeleitfähigkeit λ [W/(m^{∗}K] (Watt pro Meter und Kelvin) eines Materials definiert den Wärmestrom durch ein Material aufgrund seiner Wärmeleitfähigkeit. Beispielsweise kann die Wärmeleitfähigkeit λ des Materials des Temperierbereich größer als ungefähr 20 W/(m^{∗}K), insbesondere größer als 100 W/(m^{∗}K), größer als 200 W/(m^{∗}K), größer als 250 W/(m^{∗}K) oder größer als 300 W/(m^{∗}K) sein. Das Material des Temperierbereich kann beispielsweise ein metallisches Material sein. Beispielsweise kann diesbezüglich das Material des Temperierbereichs Titan, Aluminium, Gold, Stahl oder Kupfer darstellen.

Die Installationsbox kann dabei vollständig aus demselben Material wie dasjenige des Temperierbereichs ausgebildet sein. Alternativ kann in einer beispielhaften Ausführungsform die Installationsbox aus einem weiteren Grundkörper bestehen, welcher ein erstes Material aufweist und der Temperierbereich ein Material aufweisen, welches ein zweites Material aufweist, wobei sich das erste Material und das zweite Material unterscheiden. Ferner kann insbesondere das zweite Material einen größeren Wärmeleitkoeffizienten aufweisen als das Material des Grundkörpers der Plattform. Diesbezüglich kann das zweite Material des Temperierbereichs einen größeren Wärmeleitkoeffizienten aufweisen als das erste Material des weiteren Grundkörpers der Installationsbox. So kann beispielsweise der weitere Grundkörper der Installationsbox aus einem Kunststoff bestehen, während der Temperierbereich der Installationsbox aus einem metallischen Werkstoff ausgebildet ist.

Das Material des Grundkörpers der Plattform weist beispielsweise einen Wärmeleitkoeffizienten auf, welcher kleiner als ungefähr 250 W/(m^{∗}K), insbesondere kleiner als 50 W/(m^{∗}K), kleiner als 1 W/(m^{∗}K) oder kleiner als 0,1 W/(m^{∗}K) ist.

Mit der erfindungsgemäßen Plattform kann der Grundkörper der Plattform zwischen den Installationsboxen sehr flach ausgebildet werden. In dem Bereich der Installationsbox und kann der Grundkörper eine Aufweitung aufweisen. In den Installationsbox sind alle funktionalen Einheiten installierbar, welche zum Betrieb der Plattform und zur Durchführung der Tests notwendig sind. Aufgrund der erfindungsgemäßen Materialauswahl des Temperierbereichs der Installationsbox kann die entstandene Wärme der funktionalen Einheiten in dem Installationsvolumen gezielt und effektiv abgeführt werden. Dabei ist es nicht notwendig, das Material des Grundkörpers in Abhängigkeit seiner Wärmeleiteigenschaften auszuwählen, da die Funktion der Wärmeableitung ausschließlich durch den Temperierbereich der Installationsbox erfüllt wird. Somit kann eine vorteilhafte Materialkombination zwischen der Installationsbox und dem Grundkörper der Plattform gewählt werden, ohne eine Überhitzung der funktionalen Elemente zu riskieren. Mittels der erfindungsgemäßen Plattform wird somit eine temperaturresistente verfahrbare Plattform bereitgestellt, welche gleichzeitig robust und effizient ausgebildet werden kann.

Gemäß einer beispielhaften Ausführungsform weist die Installationsbox Kühlrippen auf, welche sich entlang einer Oberfläche des Temperierbereichs erstrecken. Die Kühlrippen erstrecken sich von der Oberfläche insbesondere in Richtung Umgebung. Die Kühlrippen dienen zur Vergrößerung der Oberfläche des Temperierkörpers, um die Wärmeübertragung an die Umgebung und damit die Kühlung zu verbessern. Die Kühlrippen bilden eine gerippte Oberfläche des Temperierbereichs sein. In einer beispielhaften Ausführungsform weist der oben beschriebene Deckel die Kühlrippen auf.

Gemäß einer weiteren beispielhaften Ausführungsform weist die Installationsbox einen Kühlmittelkanal auf, wobei der Kühlmittelkanal in dem Installationsvolumen verläuft und ferner entlang oder in dem Temperierbereich derart verläuft, dass eine thermische Kopplung zwischen einem Kühlmittel in dem Kühlmittelkanal und dem Temperierbereich bereitstellbar ist. In dem Kühlmittelkanal kann das Kühlmittel, wie beispielsweise eine Flüssigkeit, zum Beispiel Wasser, verlaufen. Der Kühlmittelkanal verläuft dabei zum Beispiel entlang einer Innenseite der Installationsbox, sodass Wärme aus dem Installationsvolumen durch das Kühlmittel aufgenommen werden kann. Der Kühlmittelkanal verläuft ferner entlang des Temperierbereichs, um die Wärme des Kühlmittels an den Temperierbereich und entsprechend weiter an die Umgebung abzugeben. Dabei ist der Kühlmittelkanal in direktem Kontakt mit einer Oberfläche, insbesondere der Innenfläche, des Temperierbereichs, um eine thermische Kopplung bereitzustellen. Ferner kann zwischen dem Kühlmittelkanal und dem Temperierbereich eine Wärmeleitpaste eingebracht werden. In einer beispielhaften Ausführungsform verläuft ein Teil des Kühlmittelkanals durch den abnehmbaren Deckel. Mittels Fluidkopplungen kann der Bereich des Kühlmittelkanals im Deckel mit Bereichen des Kühlmittelkanals innerhalb der Installationsbox fluiddicht gekoppelt werden. Der Kühlmittelkanal kann entlang des Temperierbereichs mäanderförmig verlaufen, um somit die Kühlstrecke entlang des Temperierbereichs zu vergrößern.

Gemäß einer weiteren beispielhaften Ausführungsform ist die Installationsbox aus einem Material ausgebildet, welches steifer als das Material des Grundkörpers ist, wobei das Material der Installationsbox insbesondere eine Dichte von mehr als 2500 kg/m³ aufweist. Somit können beispielsweise die funktionale Einheiten in der Installationsbox geschützt installiert werden, während sich der Grundkörper um die Installationsbox herum elastisch verformen kann. So kann bei Belastung der Plattform gewährleistet werden, dass sich der Grundkörper elastisch verformt, ohne jedoch die sensiblen funktionalen Elemente zu schädigen, da diese in der steiferen und härteren Inflationsbox vorliegen.

Gemäß einer weiteren beispielhaften Ausführungsform ist die Installationsöffnung der Installationsbox in der Bodenfläche des Grundkörpers ausgebildet ist. Somit kann ein einfacher Zugang über die Bodenfläche zur Installationsbox bereitgestellt werden.

Gemäß einer weiteren beispielhaften Ausführungsform ist das Rollenelement in der Installationsbox derart angeordnet, dass zumindest ein Teil des Umfangs des Rollenelements durch die Installationsöffnung aus der Installationsbox herausragt.

Gemäß einer weiteren beispielhaften Ausführungsform ist das Rollenelement mittels eines Achsenelements rotierbar in der Installationsbox gelagert ist. Das Achsenelement ist derart in der Installationsbox befestigt, dass das Achsenelement in Richtung Installationsöffnung verformbar (insbesondere elastisch verformbar) und/oder verschiebbar ist.

Wenn das Achsenelement elastisch verformbar ausgebildet ist, kann das Rollenelement bei Belastung des Grundkörpers in das Installationsvolumen hineingedrückt werden, ohne dass beispielsweise ein Bereich des Rollenelements aus dem Installationsvolumen nach außen ragt. Somit kann sich der Grundkörper verformen und beispielsweise gegen den Boden gedrückt werden, ohne dass das Rollenelement beschädigt wird. Aufgrund der elastischen Verformung des Achsenelements verformt sich dieses zurück in seine Ausgangsposition, nachdem die Belastung der Grundplatte gestoppt wurde. In dieser Ausgangsposition ragt das Rollenelement erneut teilweise aus dem Installationsvolumen heraus und von der Bodenfläche hervor, sodass die Plattform erneut über dem Boden gerollt werden kann.

Gemäß einer weiteren beispielhaften Ausführungsform ist das Achsenelement mittels einer Vorspannfeder in Richtung Installationsöffnung vorgespannt, wobei die Installationsöffnung der Installationsbox in der Bodenfläche des Grundkörpers ausgebildet ist. Das Achsenelement kann beispielsweise steif und robust ausgebildet werden und mit einer Vorspannfeder derart vorgespannt werden, dass das Rollenelement im unbelasteten Zustand des Grundkörpers zumisst teilweise aus der Installationsöffnung hinausragt, sodass die Plattform entlang des Bodens rollen kann. Bei Belastung der Plattform in Richtung Boden wird das Achsenelement und somit auch das Rollenelement in Richtung innerem der Installationsbox gedrückt bis das Rollenelement in dem Installationsvolumen vollständig vorliegt und somit geschützt ist. Nach Entlastung der Plattform zieht oder drückt die Vorspannfeder das Rollenelement erneut in Richtung Ausgangsposition. Zur besseren Führung kann das Achsenelement in an dessen Enden angeordneten Führungsschienen angeordnet sein, welche an der Installationsbox befestigt sind.

Gemäß einer weiteren beispielhaften Ausführungsform weist die Installationsbox eine Installationsöffnung auf, durch welche das Installationsvolumen von der Umgebung zugänglich ist, wobei der Deckel derart abnehmbar ist, dass ein Zugang zu dem Installationsvolumen bereitstellbar ist. Der Deckel ist beispielsweise mit einer Schraubverbindung oder mit zusätzlichen Befestigungselement, wie beispielsweise Schrauben, an einem Grundkörper der Installationsbox oder an dem Grundkörper der Plattform lösbar befestigt. Der Deckel verschließt die Installationsöffnung der Installationsbox und schützt somit die funktionalen Einrichtungen innerhalb der Installationsbox. Der Deckel kann aus demselben Material wie der Grundkörper der Installationsbox bestehen.

Ferner kann der Deckel den Temperierbereich ausbilden und ein unterschiedliches Material im Vergleich zu dem Grundkörper der Installationsbox aufweisen. Beispielsweise kann der Grundkörper der Installationsbox aus einem Material bestehen, welcher einen geringeren Wärmeleitkoeffizienten als ein Material des Deckels aufweist. So kann beispielsweise der Grundkörper der Installationsbox aus einem organischen Material, wie beispielsweise Kunststoff oder Holz, bestehen und der Deckel aus einem metallischen Material, wie beispielsweise Aluminium oder Kupfer.

Gemäß einer weiteren beispielhaften Ausführungsform weist die Installationsbox ein Dichtelement, insbesondere einen Dichtring, auf, wobei das Dichtelement derart an dem Deckel angeordnet ist, dass das Installationsvolumen von der Umgebung abgedichtet ist. Somit ist das Installationsvolumen auch vor äußeren Einflüssen, wie beispielsweise Regen oder Schmutzpartikel, geschützt.

Gemäß einer weiteren beispielhaften Ausführungsform ragt die Installationsbox, insbesondere mit dem Temperierbereich, von der Befestigungsfläche mit einem Bereich von der Befestigungsfläche und/oder der Bodenfläche hervor, wobei der Bereich insbesondere eine Kuppelform ausbildet.

Der Temperierbereich und insbesondere die Kuppelform kann beispielsweise eine Kantenlänge oder einen Durchmesser von 10 cm bis 40 cm, insbesondere 30 cm (Zentimeter) aufweisen. Die Fläche des Temperierbereichs kann entsprechend zwischen ungefähr 100 cm² und 1600 cm²(Quadratzentimeter), insbesondere 900 cm², aufweisen.

Gemäß einer weiteren beispielhaften Ausführungsform ragt die Installationsbox von der Befestigungsfläche mit einem Bereich hervor, wobei der Bereich insbesondere eine Kuppelform ausbildet. Die Kuppelform bildet somit eine gebogene Haube aus, welche aus einer Ebene, in welcher die Befestigungsfläche verläuft, hervortritt. Somit kann auch bei einer dünnen Ausführung des Grundkörpers ein ausreichender Installationsplatz geschaffen werden. Aufgrund der Kuppelform werden Sensorstrahlungen, wie beispielsweise Radarstrahlung, welche von den zu testenden Assistenzsystemen generiert werden, derart zurück reflektiert werden, dass die reflektierten Strahlungen nicht bzw. nur sehr geringfügig von dem Assistenzsystem messbar sind.. Somit wird verhindert, dass die Assistenzsysteme Störungen messen, welche aufgrund der Verdickung des Installationsvolumens herrührt.

Die Kuppelform kann beispielsweise mittels des oben beschriebenen Deckels ausgebildet werden. Mit anderen Worten weist der Deckel eine Kugelform auf, wobei der Deckel lösbar an dem Grundkörper und/oder der Installationsbox befestigt werden kann.

Gemäß einer weiteren beispielhaften Ausführungsform weist die Plattform ein funktionales Element auf, welches in Betrieb Wärme generiert. Das funktionale Element ist in dem Installationsvolumen der Installationsbox installiert, wobei das funktionale Element thermisch mit dem Temperierbereich derart gekoppelt ist, dass eine Wärmeübertragung von dem funktionalen Element auf den Temperierbereich bereitstellbar ist. So können beispielsweise die Rollenelemente, Sensoren, insbesondere optische Sensoren und Beschleunigungssensoren, Antriebseinheiten, Positionsmeßsysteme (z.B. GPSbasierende Systeme) oder Steuereinheiten (CPU-Einheiten) als funktionale Einheiten in der Installationsbox installiert sein.

Der Begriff "thermisch gekoppelt" definiert eine Verbindung zwischen dem Temperierbereich und dem funktionalen Element, entlang welcher eine Wärmeübertragung von dem funktionalen Element auf den Temperierbereich stattfinden kann. Zwischen dem funktionalen Element und dem Temperierbereich ist somit kein dämmender Luftspalt vorgesehen. Gemäß einer weiteren beispielhaften Ausführungsform weist das funktionale Element eine Kontaktfläche auf, welche ausgebildet ist, den Temperierbereich zu kontaktieren, um die thermische Kopplung bereitzustellen.

Gemäß einer weiteren beispielhaften Ausführungsform ist zwischen dem funktionalen Element und dem Temperierbereich ein Adaptermittel, insbesondere eine Wärmeleitpaste, derart vorgesehen ist, dass eine Wärmeübertragung von dem funktionalen Element auf den Temperierbereich bereitstellbar ist. Eine Wärmeleitpaste ist eine Paste, welche die Wärmeübertragung zwischen zwei Objekten verbessert. Die Zusammensetzung der jeweiligen Wärmeleitpasten ist abhängig von der benötigten Wärmeleitfähigkeit. Beispielsweise enthalten Wärmeleitpasten hauptsächlich Silikonöl und Zinkoxid, und sind mit Aluminium-, Kupfer-, Graphit- und/oder Silberbestandteilen herstellbar. Weiterhin kann die Wärmeleitpaste einen thermoplastischen Kunststoff aufweisen.

Gemäß einer weiteren beispielhaften Ausführungsform weist die Plattform ferner ein Sensorelement, insbesondere einen Beschleunigungssensor, einen optischen Sensor, einen Positionsmeßsensor (z.B.GPS-Sensor) oder einen Temperatursensor, welches in der Installationsbox angeordnet ist.

Gemäß einer weiteren beispielhaften Ausführungsform weist die Plattform ferner eine Steuereinheit zum Steuern der Rollenelemente auf, wobei die Steuereinheit zum drahtlosen Datenaustausch mit einer weiteren externen Bedieneinheit zum Erzeugen von Steuerdaten konfiguriert ist. Die Steuereinheit kann beispielsweise eine Sende- und Empfangseinheit aufweisen, mit welcher Messdaten, Steuerdaten oder andere Informationen an eine externe und beabstandete Einheit übertragen werden können. Ferner ist die Steuereinheit beispielsweise mit den Rollenelementen und den Antriebseinheiten gekoppelt, um somit den Antrieb der Rollenelemente und die Lenksteuerung der Rollenelemente zu steuern. Die Bedieneinheit kann beispielsweise eine Fernsteuerung darstellen, welche von einem Benutzer bedient wird. Ferner kann die Bedieneinheit Teil eines Steuercomputers sein, welcher die Bewegung, d.h. die Richtung und die Geschwindigkeit, des Kollisionskörpers und/oder die Richtung und Geschwindigkeit der Plattform steuert und so gewünschte Testsituationen zu simulieren.

Im Folgenden werden beispielhafte Ausführungsformen der Trägerstruktur näher beschrieben.

An den Grundkörper ist die Trägerstruktur mit dem zumindest einen elastisch verformbaren Trägerelement gekoppelt. Nach einer belastungsinduzierten Verformung des Grundkörpers, das heißt nachdem der Grundkörper ohne äußere Belastung vorliegt, formt sich das Trägerelement und somit den Grundkörper zurück in eine belastungsfreie, möglichst ebene, unverwölbte Ausgangsform.

Die Trägerstruktur bildet eine selbsttragende Struktur aus, welche den Grundkörper derart verstärkt, dass aufgrund der Belastung mit dem Testobjekt und dem Einwirken der Schwerkraft der Grundkörper weitgehend unverformt bleibt. Mit anderen Worten kann der Grundkörper verformt werden, wobei die notwendige Stabilität von der Trägerstruktur gebildet wird. Die Trägerstruktur kann beispielsweise im Inneren des Grundkörpers ausgebildet werden, beispielsweise in einem Montageprozess oder in dem während eines Gießprozesses des Grundkörpers die Trägerstruktur integriert wird. Alternativ kann die Trägerstruktur an einer Oberfläche des Grundkörpers angeordnet werden. Der Grundkörper kann ferner entsprechende Vertiefungen, wie beispielsweise Nuten, aufweisen, in welcher die Trägerstruktur integriert werden kann.

Die Trägerstruktur kann insbesondere aus einem Material gebildet werden, welche eine Dichte von über 2500 kg/m³ und beispielsweise ein E-Modul von über 60 GPa aufweist. Das Material der Trägerstruktur kann beispielsweise ein metallischer Werkstoff, wie beispielsweise Stahl, Aluminium oder ein elastischer Kunststoff sein.

Die Trägerstruktur besteht beispielsweise aus Trägerelementen, welche an ihren jeweiligen Enden miteinander verbunden sind. Trägerelemente bestehen beispielsweise aus Stützbändern oder Stäben, um die tragende Trägerstruktur zu bilden.

Gemäß einer weiteren beispielhaften Ausführungsform ist die Trägerstruktur derart ausgebildet, dass das Trägerelement den Grundköper derart vorspannt, dass der Grundkörper in der belastungsfreien Ausgangsform elastisch verformt vorliegt. Somit wird der Grundkörper beispielsweise unter Spannung gehalten, sodass trotz eines dünnen und leichten Aufbaus des Grundkörpers eine Steifigkeit erhöht wird.

Gemäß einer weiteren beispielhaften Ausführungsform weist der Grundkörper zumindest ein Koppelelement auf, welches das Trägerelement verschiebbar an den Grundkörper koppelt. Das Koppelelement kann insbesondere als Buchse und das Trägerelement als Trägerstange ausgebildet sein, welche in der Buchse verschiebbar gelagert ist. Entsprechend kann die Trägerstange einen Endbereich mit einem Hohlprofil aufweisen und der Grundkörper ein entsprechend hervorragendes Element bzw. einen Pin, welcher in den hohlen Endbereich der Trägerstange eingreift. Das Koppelelement kann beispielsweise auch als Öse, Lasche oder Sackloch in den Grundkörper ausgebildet sein.

Die Trägerstange weist insbesondere eine Erstreckungsrichtung auf. Die Trägerstange kann in dem Koppelelement entlang der Erstreckungsrichtung translatorisch verschiebbar gekoppelt sein. Die Trägerstange und der Grundkörper können beispielsweise aufgrund ihrer unterschiedlichen Materialien unterschiedliche Wärmeausdehnungskoeffizienten aufweisen. Beispielsweise kann sich die Trägerstruktur (zum Beispiel aus Metall) weniger aufgrund von Temperatureinflüssen verformen als der Grundkörper (zum Beispiel aus Kunststoff). Aufgrund der geringerer Verformung der Trägerstruktur wird eine dadurch induzierte Verformung des Grundkörpers verhindert, da die Trägerstruktur, bzw. insbesondere ihre Trägerstangen, sich entlang ihrer Erstreckungsrichtung bewegen können, ohne dass der Grundkörper entsprechend direkt proportional ausgedehnt bzw. verformt oder verwölbt wird. Bei Ausdehnung der Trägerstange wird (aufgrund der translatorische Bewegungsmöglichkeit zwischen Koppelelement und Trägerstange) zunächst ein Spiel in dem Koppelelement ausgenutzt bis eine direkte Kraftübertragung aufgrund der Dehnung auf den Grundkörper stattfindet. Somit wird eine hohe Formstabilität der Plattform auch bei schnell ändernden Temperaturen erzielt.

Gemäß einer weiteren beispielhaften Ausführungsform ist die Trägerstruktur derart ausgebildet, dass das elastisch verformbare Trägerelement mit dem Grundkörper derart gekoppelt ist, dass das Trägerelement entgegen eine thermisch induzierten Verformung des Grundkörpers wirkt. Beispielsweise kann das Trägerelement steifer ausgebildet sein als die Grundplatte, sodass eine thermische Verformung, insbesondere Verwölbung, der Grundplatte unterbunden wird aufgrund der Biegesteifigkeit der Trägerelemente. Die Trägerelemente können beispielsweise aus den oben beschriebenen Trägerstangen bestehen und somit generell in ihrer Erstreckungsrichtung eine Wärmeausdehnung aufweisen. Gegenüber einer Verwölbungskraft der Grundplatte sind die Trägerstangen robust und wirken somit einer Verformung der Grundplatte entgegen. In einer alternativen Ausführungsform kann beispielsweise der Wärmeausdehnungskoeffizient des Materials der Trägerelements größer sein als der Wärmeausdehnungskoeffizient des Materials des Grundkörpers.

Gemäß einer weiteren beispielhaften Ausführungsform ist zumindest eine Installationsbox in einer Aufnahmeöffnung des Grundkörpers angeordnet. Das Koppelelement ist an der Installationsbox angeordnet. Beispielsweise kann das Koppelelement integral mit der Installationsbox ausgebildet werden. Insbesondere kann das Koppelelement aus demselben Material wie die Installationsbox bestehen. In einer bevorzugten Ausführungsform besteht das Koppelelement wie auch die Installationsbox aus einem metallischen Werkstoff und weisen somit eine höhere Steifigkeit und Härte im Vergleich zu dem duktileren Kunststoff auf.

Der Grundkörper kann in einer weiteren beispielhaften Ausführungsform zumindest drei Außenkantenbereiche aufweisen, wobei die Trägerstruktur zumindest drei Trägerelemente, beispielsweise Trägerstangen, aufweist. Entlang der Außenkantenbereiche verläuft jeweils eines der Trägerelemente. Jeweils zwei der Trägerelemente sind an ihren Endbereichen beispielsweise jeweils über ein gemeinsames Koppelelement und/oder über eine gemeinsame Installationsbox gegenseitig miteinander verbunden. Die Trägerelemente verlaufen somit jeweils parallel zu den Kanten der entsprechenden Außenkantenbereiche des Grundkörpers. Somit kann ein robustes und tragendes Tragwerk zur definierten Versteifung des Grundkörpers erzielt werden.

Gemäß einer weiteren beispielhaften Ausführungsform weisen zwei gegenüberliegende Trägerelemente jeweils weitere Kopplungselemente auf. Die Trägerstruktur weist zumindest einen Verbindungsträger auf, welcher mit seinen Enden jeweils in einem der Kopplungselemente verschieblich (entlang seiner Erstreckungsrichtung) befestigt ist. Der Verbindungsträger bildet somit einen eine Querstrebe aus, womit die Trägerstruktur verwindungssteifer wird.

Es wird darauf hingewiesen, dass die hier beschriebenen Ausführungsformen lediglich eine beschränkte Auswahl an möglichen Ausführungsvarianten der Erfindung darstellen. So ist es möglich, die Merkmale einzelner Ausführungsformen in geeigneter Weise miteinander zu kombinieren, so dass für den Fachmann mit den hier expliziten Ausführungsvarianten eine Vielzahl von verschiedenen Ausführungsformen als offensichtlich offenbart anzusehen sind. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügten Zeichnungen näher beschrieben. Es zeigen:
Fig. 1 eine schematische Darstellung einer Plattform gemäß einem Ausführungsbeispiel der vorliegenden Erfindung, wobei die Plattform in einem unbelasteten Zustand auf dem Boden aufliegt,
Fig. 2 eine schematische Darstellung der Plattform aus Fig. 1, wobei die Plattform in einem belastete Zustand dargestellt ist,
Fig. 3 eine perspektivische Darstellung einer Plattform gemäß einem Ausführungsbeispiel der vorliegenden Erfindung,
Fig. 4 eine Schnittdarstellung einer Installationsbox der Plattform gemäß einer beispielhaften Ausführungsform der vorliegenden Erfindung, und
Fig. 5 eine schematische Darstellung einer Plattform, in welcher eine Trägerstruktur angeordnet ist, gemäß einer beispielhaften Ausführungsform der vorliegenden Erfindung.

### Detaillierte Beschreibung von exemplarischen Ausführungsformen

Gleiche oder ähnliche Komponenten in unterschiedlichen Figuren sind mit gleichen Bezugsziffern versehen. Die Darstellungen in den Figuren sind schematisch.

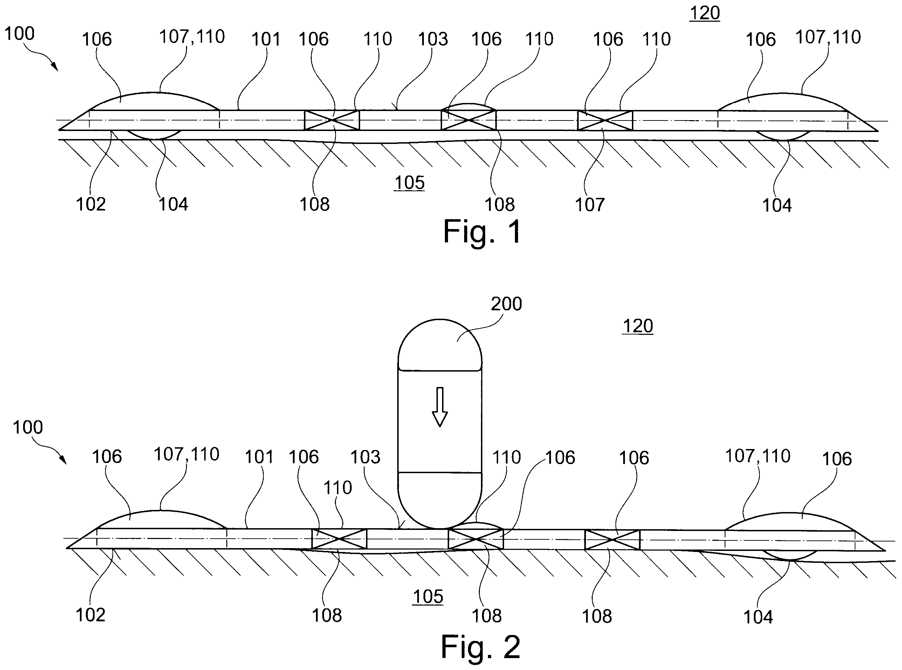

**Fig. 1** und **Fig. 2** zeigen eine Plattform 100 zum Testen von Kollisionen oder kollisionsnahen Situationen zwischen einem Kollisionskörper, insbesondere einem Fahrzeug, und einem Testobjekt. Die Plattform 100 weist einen Grundkörper 101 auf, welcher eine Bodenfläche 102 und eine gegenüber der Bodenfläche 102 ausgebildete Befestigungsfläche 103 aufweist, wobei auf der Befestigungsfläche 103 eine Befestigungsvorrichtung 109 ausgebildet ist zum Befestigen des Testobjekts. Ferner weist die Plattform 100 zumindest ein Rollenelement 104 auf, welches an der Bodenfläche 102 angeordnet ist, wobei das Rollenelement 104 derart ausgebildet ist, dass der Grundkörper 101 mittels des Rollenelements entlang eines Bodens 105 verfahrbar ist. Der Grundkörper 101 ist aus einem elastisch verformbaren Material mit einer Dichte unter 2500 kg/m³ ausgebildet.

Der Kollisionskörper ist beispielsweise ein Pkw, welcher gegen ein auf der Plattform 100 befestigtes Testobjekt fahren kann, um einen Aufprall mit einem Testobjekt herbeizuführen und/oder Fahrerassistenzsysteme in dem Pkw zu testen. Dabei kann der Kollisionskörper bzw. das Fahrzeug mit seinem Fahrzeugreifen 200 über die Plattform 100 fahren, so dass diese sich elastisch verformt (siehe Fig. 2).

Das Testobjekt ist beispielsweise ein menschenähnlicher Dummy, welcher stehend, liegend oder sitzend auf der Plattform befestigbar ist.

Die Plattform 100 ist mit Rollenelementen 104 verfahrbar entlang eines Bodens 105 verfahrbar. Die Plattform 100, auf welcher das Testobjekt angeordnet ist, kann den Fahrweg des Kollisionskörpers kreuzen, sodass die Annäherung des Testobjekts an den Kollisionskörper mittels Fahrerassistenzsystemen gemessen werden kann und diese dabei getestet werden.

Die Plattform 100 weist den Grundkörper 101 auf, welcher eine plattenähnliche Form ausbildet. Dies bedeutet das seine Erstreckung innerhalb einer Bodenebene deutlich größer ist als seine Dicke in zum Beispiel vertikaler Richtung. Der Grundkörper 101 weist dabei eine untere Bodenfläche 102 und eine gegenüberliegende obere Befestigungsfläche 103 auf. Der Grundkörper 101 wird mit seiner Bodenfläche auf einem Boden 105 aufgelegt. In der Bodenfläche 102 sind die Rollenelemente 104 drehbar angeordnet, welche zumindest teilweise aus dem Grundkörper 101 hinausragen und somit einen Abstand zwischen Grundkörper 101 und Boden 105 bereitstellen. Auf der Befestigungsfläche 103 ist eine Befestigungsvorrichtung 109 ausgebildet. Die Befestigungsvorrichtung 109 ist konfiguriert um das Testobjekt zu fixieren.

Die Befestigungsvorrichtung 109 kann beispielsweise aus einem Hakensystem bestehen, in welches das Testobjekt eingehängt werden kann. Ferner kann die Befestigungsvorrichtung 109 einen Magneten, insbesondere einen steuerbaren Elektromagneten, aufweisen, um mittels magnetischer Haltekraft das Testobjekt an der Befestigungsfläche 103 zu befestigen.

An der Bodenfläche 102 sind die Rollenelemente angeordnet. Die Plattform 100 ist mittels den Rollenelementen 104 entlang dem Boden 105 verfahrbar. Die Plattform 100 ist dabei frei verfahrbar ausgebildet, indem, wie weiter unten detaillierter beschrieben, dass Rollenelement selbst angetrieben wird und, gemäß einer beispielhaften Ausführungsform, lenkbar ausgebildet ist.

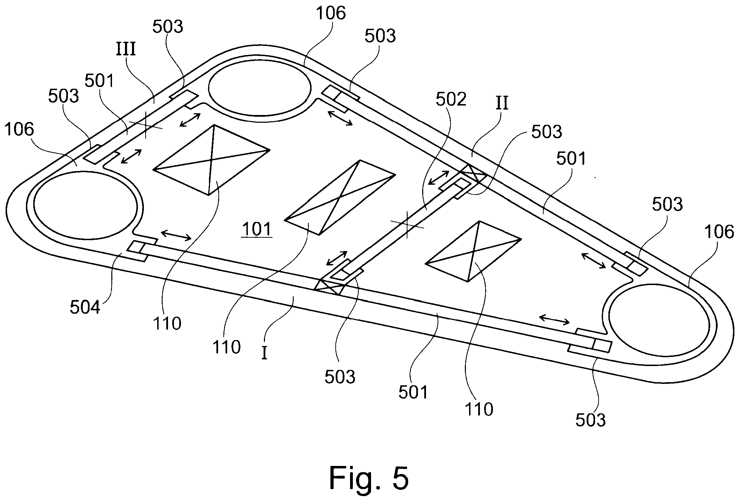

Um eine kompakte und gleichzeitig jedoch robuste Ausführung der Plattform 100 bereitzustellen, wird der Grundkörper 101 aus einem elastisch verformbaren Material mit einer Dichte unter 2500 kg/m3 ausgebildet und/oder eine Trägerstruktur (siehe Fig. 5) mit zumindest einem elastisch verformbaren Trägerelement 501 (siehe Fig. 5) mit dem Grundkörper 101 zu koppeln, sodass, nach einer belastungsinduzierten Verformung des Grundkörpers 101, das Trägerelement 501 den Grundkörper 101 in eine belastungsfreie Ausgangsform zurückformt.

Der Grundkörper 101 ist derart ausgebildet, dass er in einem Zustand, in welchem er mit den Rollenelementen 104 auf dem Boden 105 aufliegt und in welchem das Testobjekt auf der Befestigungsfläche 103 befestigt ist, von dem Boden 105 beabstandet ist (siehe Fig. 1). Dies bedeutet, dass lediglich die Rollenelemente 104 auf dem Boden 105 aufliegen.

Während eines Tests kann der Kollisionskörper, zum Beispiel mit einem Reifen 200, über den Grundkörper 101 fahren, sodass dieser sich verformt und beispielsweise punktuell oder vollflächig mit seiner Bodenfläche 102 auf dem Boden 105 aufliegt. Nachdem der Reifen 200 über den Grundkörper 101 gefahren ist, kann sich dieser wieder in die ursprüngliche Ausgangsposition zurück verformen.

Somit kann der Grundkörper 101 sehr flach und robust ausgebildet werden, da der Grundkörper 101 aufgrund seiner elastischen Eigenschaften nachgibt ohne zu brechen, wie es im Fall von steifen und rigiden Körpern der Fall wäre.

Der Grundkörper 101 kann eine Dicke zwischen der Bodenfläche 102 und der Befestigungsfläche 103 von weniger als ungefähr6 cm aufweisen. Die Dicke ist dabei der kürzeste Abstand zwischen der Bodenfläche 102 und der Befestigungsfläche 103. Neben dem Bereich mit der geringsten Dicke kann der Grundkörper 101 zusätzlich noch vereinzelt dickere Bereiche aufweisen, wie beispielsweise die unten beschriebenen Installationsboxen 106. Aufgrund der erfindungsgemäßen Auswahl der Dichte des Materials des Grundkörpers 101 ist eine äußerst dünne Ausbildung, insbesondere geringer als 6 cm Dicke, möglich.

Wie in Fig. 1 und Fig. 2 dargestellt ist der Grundkörper 101 aus einem Vollmaterial hergestellt. In dem Vollmaterial des Grundkörpers 101 sind beispielsweise die Installationsboxen 106 ausgebildet.

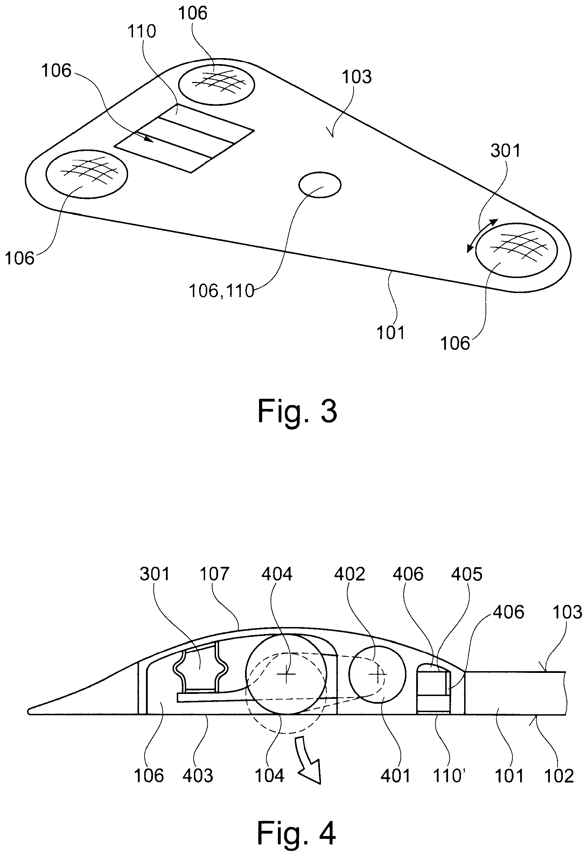

Die Plattform 100 weist eine Installationsbox 106 aufweisend ein Installationsvolumen auf, welche in einer Aufnahmeöffnung des Grundkörpers 101 angeordnet ist. Die Installationsbox 106 weist eine Installationsöffnung 403 (siehe Fig. 4) auf, durch welche das Installationsvolumen von außen zugänglich ist. Die Installationsbox 106 kann integral beispielsweise als Aussparung in den Grundkörper 102 ausgebildet werden. In dem Installationsvolumen der Installationsbox 106 können ein oder mehrere funktionale Elemente der Plattform 100 eingebaut werden. So können beispielsweise die Rollenelemente 104, Sensoren, Antriebseinheiten oder Steuereinheiten in der Installationsbox installiert sein.

Die Installationsbox 106 ist derart in der Aufnahmeöffnung des Grundkörpers 101 vorgesehen ist, dass ein Temperierbereich 110 der Installationsbox 106 in Kontakt mit einer Umgebung 120 des Grundkörpers 101 ist. Der Temperierbereich 110 ist aus einem Material ausgebildet, welches einen größeren Wärmeleitkoeffizienten aufweist als ein Material des Grundkörpers 101.

Der Temperierbereich 110 der Installationsbox 106 ist ein Bereich derselben, welcher in Kontakt mit der Umgebung 120 des Grundkörpers 101, d.h. beispielsweise mit der Umgebungsluft des Grundkörpers 101 in Kontakt ist. Somit kann die Umgebungsluft des Grundkörpers 101 als Kühlmittel eingesetzt werden und der Temperierbereich 110 Wärme aus dem Inneren der Installationsbox 106 an die Umgebung abgeben. Somit wird insbesondere die Temperatur von funktionalen Einheiten in dem Installationsvolumen nach außen an die Umgebung über den Temperierbereich 110 abgegeben.

Insbesondere ist der Temperierbereich 110 aus einem Material ausgebildet, welches einen größeren Wärmeleitkoeffizienten als ein Material des Grundkörpers 101 aufweist.

Ein Deckel bildet zumindest teilweise den Temperierbereich 110 aus, wobei der Deckel derart abnehmbar ist, dass ein Zugang zu dem Installationsvolumen bereitstellbar ist. Der Deckel verschließt die Installationsöffnung 403 der Installationsbox 106 und schützt somit die funktionalen Einrichtungen innerhalb der Installationsbox 106.

Die Installationsbox 106 ragt wie in Fig. 1 und Fig. 2 dargestellt von der Befestigungsfläche 103 mit einem Bereich hervor, wobei der Bereich insbesondere eine Kuppelform 107 ausbildet. Die Kuppelform 107 bildet somit eine gebogene Haube aus, welche aus einer Ebene, in welcher die Befestigungsfläche 103 verläuft, hervortritt. Somit kann auch bei einer dünnen Ausführung des Grundkörpers 101 ein ausreichender Installationsplatz geschaffen werden. Aufgrund der Kuppelform 107 werden Sensorstrahlungen, wie beispielsweise Radarstrahlung, welche von den zu testenden Assistenzsystemen generiert werden, in einem Winkel zurück reflektiert, mit welchem die reflektierten Strahlungen nicht messbar sind. Somit wird verhindert, dass die Assistenzsysteme Störungen messen, welche aufgrund der Verdickung des Installationsvolumens herrührt.

Die Kuppelform 107 kann beispielsweise mittels des oben beschriebenen Deckels ausgebildet werden. Mit anderen Worten weist der Deckel und somit auch der Temperierbereich 110 eine Kuppelform 107 auf, wobei der Deckel lösbar an dem Grundkörper 101 und/oder der Installationsbox 106 befestigt ist.

Die beabstandeten Installationsboxen 106 sind z.B. funktional, beispielsweise zum Datenaustausch, miteinander gekoppelt werden (beispielsweise über leitende Drähte oder Lichtwellenleiter).

Die Rollenelemente 104 sind in den Installationsboxen 106 derart angeordnet, dass zumindest ein Teil des Umfangs der Rollenelemente 104 durch die Installationsöffnung aus der Installationsbox 106 herausragen.

Die Kuppelform 107 kann beispielsweise mittels des oben beschriebenen Deckels ausgebildet werden. Mit anderen Worten weist der Deckel und somit auch der Temperierbereich 110 eine Kuppelform 107 auf, wobei der Deckel lösbar an dem Grundkörper 101 und/oder der Installationsbox 106 befestigt ist.

In der Plattform 100 ist ferner ein Sensorelement 108, insbesondere einen Beschleunigungssensor, einen optischen Sensor oder einen Temperatursensor, welches in der Installationsbox angeordnet.

**Fig. 3** zeigt eine perspektivische Darstellung einer beispielhaften Ausführungsform, wobei die Plattform 100 drei Rollenelemente 104 aufweist, welche an der Bodenfläche 102 beabstandet angeordnet sind. Der Grundkörper 101 bildet einen dreieckigen Grundriss aus. Ein dreieckiger Grundriss weist drei Eckbereiche auf. In jedem der Eckbereiche ist beispielsweise ein Rollenelement 104 ausgebildet. Somit ist eine hohe Rollstabilität und eine gute Steuerbarkeit der Plattform gegeben.

Die Plattform 100 weist ferner einen Lenkmechanismus 301 auf, welcher ausgebildet ist, das zumindest eine Rollenelement 104 (siehe Doppelpfeil in Fig. 3) zu lenken. Das Rollenelement 104 ist schwenkbar an dem Grundkörper 101 ausgebildet sein. Der Lenkmechanismus 301 einen Lenkmotor (z.B. Servomotor) auf, welcher mit dem zumindest einen Rollenelement 104 gekoppelt ist, um das Rollenelement 104 zu lenken. Beispielsweise kann der Lenkmechanismus eine Lenkachse aufweisen, an welcher das Rollenelement 104 schwenkbar befestigt ist. Der Servomotor des Lenkmechanismus 301, welcher am Rollenelement 104 oder zentral in dem Grundkörper 101 angeordnet ist, kann nach Empfang entsprechender Steuerbefehle das Rollenelement 104 um die Lenkachse steuern.

**Fig. 4** zeigt eine Schnittdarstellung der Plattform 100 und einer Installationsbox 106 gemäß einer beispielhaften Ausführungsform der vorliegenden Erfindung. In der Installationsbox 106 ist eine Antriebseinheit 401 (z.B. ein Elektromotor) angeordnet, welche ausgebildet ist, das zumindest eine Rollenelement anzutreiben 104. Die Antriebseinheit 401 treibt eine oder mehrere Rollenelemente 104 gleichzeitig an.

In dem Ausführungsbeispiel von Fog. 4 ist die Antriebseinheit 401 beabstandet zu dem zumindest einen Rollenelement 104 angeordnet, wobei die Antriebseinheit 401 insbesondere mittels eines Antriebsriemens 402 mit dem Rollenelement 104 zum Übertragen einer Antriebskraft gekoppelt ist. Die Antriebseinheit 401 ist in Fig. 4 vollumfänglich in (thermischen) Kontakt mit dem Material bzw. mit dem Temperierbereich 110 der Installationsbox 106.

Ferner ist der ein Lenkmechanismus 301 dargestellt, welcher ausgebildet ist, das zumindest eine Rollenelement 104 zu lenken. Das Rollenelement 104 kann beispielsweise schwenkbar an dem Grundkörper ausgebildet sein. Der Lenkmechanismus 301 weist einen Lenkmotor (z.B. einen Servomotor) auf, welcher mit dem zumindest einen Rollenelement 104 gekoppelt ist, um das Rollenelement 104 zu lenken. Beispielsweise kann der Lenkmechanismus 301 eine Lenkachse aufweisen, an welcher das Rollenelement 104 schwenkbar befestigt ist. Der Servomotor des Lenkmechanismus 301, welcher am Rollenelement 104 oder zentral in dem Grundkörper 101 angeordnet ist, kann nach Empfang entsprechender Steuerbefehle das Rollenelement 104 um die Lenkachse steuern.

Ferner bildet in dem Ausführungsbeispiel von Fig. 4 die Installationsbox 106 eine selbsttragende Einheit, indem diese in den Grundkörper 102, bzw. in eine entsprechend dafür vorgesehene Aufnahmeöffnung, angeordnet ist. Die Installationsbox 106 ist aus einem Material ausgebildet, welches steifer als das Material des Grundkörpers 101 ist, wobei das Material der Installationsbox 106 insbesondere eine Dichte von mehr als 2500 kg/m³ aufweist. Somit können beispielsweise die funktional Einheiten in der Installationsbox 106 geschützt installiert werden, während sich der Grundkörper 101 um die Installationsbox 106 herum elastisch verformen kann. So kann bei Belastung der Plattform 100 gewährleistet werden, dass sich der Grundkörper 101 elastisch verformen, ohne jedoch die sensiblen funktionalen Elemente zu schädigen, da diese in der steiferen und härteren Inflationsbox vorliegen.

Die Installationsöffnung 403 der Installationsbox 106 in der Bodenfläche 102 des Grundkörpers ausgebildet ist. Somit kann ein einfacher Zugang über die Bodenfläche 102 zur Installationsbox bereitgestellt werden.

Zwischen dem funktionalen Element, wie zum Beispiel der in Fig. 4 dargestellten Steuereinheit 405, und dem Temperierbereich 110 ist ein Adaptermittel, insbesondere eine Wärmeleitpaste 406, derart vorgesehen ist, dass eine Wärmeübertragung von dem funktionalen Element auf den Temperierbereich 110 bereitstellbar ist.

Das Rollenelement 104 ist mittels eines Achsenelements 404 rotierbar in der Installationsbox 106 gelagert. Das Achsenelement 404 ist derart in der Installationsbox 106 befestigt, dass das Achsenelement 404 in Richtung Installationsöffnung 403 verformbar (insbesondere elastisch verformbar) und/oder verschiebbar ist.

Wenn das Achsenelement 404 elastisch verformbar ausgebildet ist, kann das Rollenelement 104 bei Belastung des Grundkörpers 101 in das Installationsvolumen hineingedrückt werden, ohne dass beispielsweise ein Bereich des Rollenelements 104 aus dem Installationsvolumen nach außen ragt. Somit kann sich der Grundkörper 101 verformen und beispielsweise gegen den Boden gedrückt werden, ohne dass das Rollenelement 104 beschädigt wird. Aufgrund der elastischen Verformung des Achsenelements 404 verformt sich dieses zurück in seine Ausgangsposition, nachdem die Belastung der Grundplatte 101 gestoppt wurde. In dieser Ausgangsposition (in Fig. 4 gestrichelt dargestellt) ragt das Rollenelement 104 erneut teilweise aus dem Installationsvolumen heraus und von der Bodenfläche 102 hervor, sodass die Plattform 100 erneut über dem Boden gerollt werden kann.

Das Achsenelement 404 kann ebenfalls mittels einer Vorspannfeder in Richtung Installationsöffnung 403 vorgespannt werden. Bei Belastung der Plattform 100 in Richtung Boden wird das Achsenelement 404 und somit auch das Rollenelement 104 in Richtung innerem der Installationsbox 106 gedrückt bis das Rollenelement 104 in dem Installationsvolumen vollständig vorliegt und somit geschützt ist. Nach Entlastung der Plattform 100 zieht oder drückt die Vorspannfeder das Rollenelement 104 erneut in Richtung Ausgangsposition. Zur besseren Führung kann das Achsenelement 404 in an dessen Enden angeordneten Führungsschienen angeordnet sein, welche an der Installationsbox 106 befestigt sind.

Ferner ist eine Steuereinheit 405 zum Steuern der Rollenelemente 104 in der Installationsbox 106 installiert, wobei die Steuereinheit 405 zum drahtlosen Datenaustausch mit einer weiteren externen Bedieneinheit (nicht dargestellt) zum Erzeugen von Steuerdaten konfiguriert ist. Die Steuereinheit 405 kann beispielsweise eine Sende- und Empfangseinheit aufweisen, mit welcher Messdaten, Steuerdaten oder andere Informationen an eine externe und beabstandete Einheit (nicht dargestellt) übertragen werden können. Ferner ist die Steuereinheit 405 mit den Rollenelementen 104 und den Antriebseinheiten 401 gekoppelt, um somit den Antrieb der Rollenelemente 104 und den Lenkmechanismus 301 der Rollenelemente 104 zu steuern.

**Fig. 5** zeigt die Plattform 100, in welcher eine Trägerstruktur angeordnet ist, gemäß einer beispielhaften Ausführungsform der vorliegenden Erfindung. Um eine kompakte und gleichzeitig jedoch robuste Ausführung der Plattform 100 bereitzustellen, wird der Grundkörper 101 mit einer Trägerstruktur bestehend aus zumindest einem elastisch verformbaren Trägerelement 501 gekoppelt, sodass, nach einer belastungsinduzierten Verformung des Grundkörpers 101, das Trägerelement 501 den Grundkörper 101 in eine belastungsfreie Ausgangsform zurückformt. An den Grundkörper 101 ist die Trägerstruktur mit elastisch verformbaren Trägerelementen 501 gekoppelt. Nach einer belastungsinduzierten Verformung des Grundkörpers 101, das heißt nachdem der Grundkörper 101 ohne äußere Belastung vorliegt, formt sich das Trägerelement 501 und somit den Grundkörper 101 zurück in eine belastungsfreie Ausgangsform.

Die Trägerstruktur bildet eine selbsttragende Struktur aus, welche den Grundkörper 101 derart verstärkt, dass aufgrund der Belastung mit dem Testobjekt und dem Einwirken der Schwerkraft der Grundkörper 101 unverformt bleibt. Mit anderen Worten kann der Grundkörper 101 verformt werden, wobei die notwendige Stabilität von der Trägerstruktur gebildet wird. Die Trägerstruktur ist im Inneren des Grundkörpers 101 ausgebildet werden, beispielsweise in dem während eines Gießprozesses des Grundkörpers 101 die Trägerstruktur integriert wird.

Die Trägerelemente 501 sind verschiebbar an den Grundkörper 101 koppelt. Eine Buchse als Koppelelement 503 nimmt eine Trägerstange als Trägerelement 501 auf, wobei das Trägerelement 501 in der Buchse verschiebbar gelagert ist. Die Trägerstange weist insbesondere eine Erstreckungsrichtung auf. Die Trägerstange ist in dem Koppelelement 503 entlang der Erstreckungsrichtung translatorisch verschiebbar gekoppelt. Trotz einer größeren oder kleineren Verformung der Trägerstruktur wird somit eine dadurch induzierte Verformung des Grundkörpers 101 verhindert, ohne dass der Grundkörper 101 entsprechend direkt proportional ausgedehnt bzw. verformt wird. Bei Ausdehnung der Trägerstange wird (aufgrund der translatorische Bewegungsmöglichkeit zwischen Koppelelement 503 und Trägerstange) zunächst ein Spiel in dem Koppelelement 503 ausgenutzt bis eine direkte Kraftübertragung aufgrund der Dehnung auf den Grundkörper 101 stattfindet.

Das Koppelelement 503 ist an der Installationsbox 106 angeordnet. Beispielsweise kann das Koppelelement 503 integral mit der Installationsbox 106 ausgebildet werden. Insbesondere kann das Koppelelement 503 aus demselben Material wie die Installationsbox bestehen.

Der Grundkörper 101 aus Fig. 5 weist beispielsweise eine Dreiecksform mit zumindest drei Außenkantenbereiche auf, wobei die Trägerstruktur zumindest drei Trägerelemente 501, beispielsweise Trägerstangen, aufweist. Entlang der Außenkantenbereiche verläuft jeweils eines der Trägerelemente 501. Jeweils zwei der Trägerelemente 501 sind an ihren Endbereichen beispielsweise jeweils über ein Koppelelement 503 an eine gemeinsame Installationsbox 106 gekoppelt. Die Trägerelemente 501 verlaufen somit jeweils parallel zu den Kanten der entsprechenden Außenkantenbereiche des Grundkörpers 101. Somit kann ein robustes und tragendes Tragwerk zur definierten Versteifung des Grundkörpers 101 erzielt werden.

Zwei gegenüberliegende Trägerelemente 501 weisen jeweils weitere Kopplungselemente 503 auf. Die Trägerstruktur weist zumindest einen Verbindungsträger 502 auf, welcher mit seinen Enden jeweils in einem der Kopplungselemente 503 verschieblich (entlang seiner Erstreckungsrichtung) befestigt ist. Der Verbindungsträger 502 bildet somit einen eine Querstrebe aus, womit die Trägerstruktur verwindungssteifer wird.

### Bezugszeichenliste:

100 Plattform
101 Grundkörper
102 Bodenfläche
103 Befestigungsfläche
104 Rollenelement
105 Boden
106 Installationsbox
107 Kuppelform
108 Sensorelement
109 Befestigungsvorrichtung
110 Temperierbereich
120 Umgebung
200 Reifen
301 Lenkmechanismus
401 Antriebseinheit
402 Antriebsriemen
403 Installationsöffnung
404 Achsenelement
405 Steuereinheit
406 Wärmeleitpaste
501 Trägerelement
502 Verbindungsträger
503 Koppelelement

## Patentansprüche

1. Plattform (100) zum Testen von Kollisionen oder kollisionsnahen Situationen zwischen einem Kollisionskörper, insbesondere einem Fahrzeug, und einem Testobjekt, die Plattform (100) aufweisend
einen Grundkörper (101), welcher eine Bodenfläche (102) und eine gegenüber der Bodenfläche (102) ausgebildete Befestigungsfläche (103) aufweist,
wobei auf der Befestigungsfläche (103) eine Befestigungsvorrichtung (109) ausgebildet ist zum Befestigen des Testobjekts,
zumindest ein Rollenelement (104), welches an der Bodenfläche (102) angeordnet ist,
wobei das Rollenelement (104) derart ausgebildet ist, dass der Grundkörper (101) mittels des Rollenelements entlang eines Bodens (105) verfahrbar ist, wobei der Grundkörper (101) aus einem elastisch verformbaren Material mit einer Dichte unter 2500 kg/m³ ausgebildet ist,
wobei der Grundkörper (101) derart flach ausgebildet ist, dass dieser von dem Kollisionskörper überfahrbar ist, sodass sich der Grundkörper (101) verformt und mit seiner Bodenfläche (102) auf dem Boden auflegbar ist.

2. Plattform (100) gemäß Anspruch 1,
wobei das Material einen E-Modul von weniger als 60 GPa aufweist.

3. Plattform (100) gemäß Anspruch 1 oder 2,
wobei der Grundkörper (101) eine Dicke zwischen der Bodenfläche (102) und der Befestigungsfläche (103) von weniger als 6 cm, insbesondere weniger als 5cm, aufweist.

4. Plattform (100) gemäß einem der Ansprüche 1 bis 3,
wobei der Grundkörper (101) eine Druckfestigkeit von mindestens 0,9 MPa, insbesondere mindestens 1 MPa, aufweist.

5. Plattform (100) gemäß einem der Ansprüche 1 bis 4,
wobei das Material des Grundkörpers (101) ein organisches Material, insbesondere ein Holzmaterial, ein Faserverbundmaterial oder ein Kunststoffmaterial, ist.

6. Plattform (100) gemäß einem der Ansprüche 1 bis 5,
wobei der Grundkörper (101) aus einem Vollmaterial hergestellt ist, oder
wobei der Grundkörper (101) aus einer Sandwichstruktur hergestellt ist,
wobei der Grundkörper (101) insbesondere einen dreieckigen, einen viereckigen, einen runden odereinen ovalen Grundriss ausbildet.

7. Plattform (100) gemäß einem der Ansprüche 1 bis 6, ferner aufweisend zumindest eines der folgenden Merkmale:
eine Antriebseinheit (401), welche ausgebildet ist, das zumindest eine Rollenelement (104) anzutreiben,
wobei die Antriebseinheit (401) insbesondere beabstandet zu dem zumindest einen Rollenelement (104) angeordnet ist,
wobei die Antriebseinheit (401) insbesondere mittels eines Antriebsriemens (402), mittels eines Zahnradgetriebes, insbesondere eines Stirnradgetriebes und/oder als Direktantrieb mit dem Rollenelement (104) zum Übertragen einer Antriebskraft gekoppelt ist
einen Lenkmechanismus (301), welcher ausgebildet ist, das zumindest eine Rollenelement (104) zu lenken.
wobei der Lenkmechanismus (301) insbesondere einen Lenkmotor aufweist, welcher mit dem zumindest einen Rollenelement (104) gekoppelt ist, um das Rollenelement (104) zu lenken, und
drei Rollenelemente, welche an der Bodenfläche (102) beabstandet angeordnet sind,
wobei die Rollenelemente derart ausgebildet sind, dass der Grundkörper (101) mittels der Rollenelemente entlang eines Bodens (105) verfahrbar ist.

8. Plattform (100) gemäß einem der Ansprüche 1 bis 7, ferner aufweisend
eine Installationsbox (106) aufweisend ein Installationsvolumen, welche in einer Aufnahmeöffnung des Grundkörpers (101) angeordnet ist,
wobei die Installationsbox (106) eine Installationsöffnung (403) aufweist, durch welche das Installationsvolumen von außen zugänglich ist,
wobei die Installationsbox (106) aus einem Material ausgebildet ist, welches insbesondere steifer als das Material des Grundkörpers (101) ist, und
wobei das Material der Installationsbox (106) insbesondere eine Dichte von mehr als 2500 kg/m³ aufweist,
wobei die Installationsöffnung (403) der Installationsbox (106) insbesondere in der Bodenfläche (102) des Grundkörpers (101) ausgebildet ist,
wobei insbesondere das Rollenelement (104) in der Installationsbox (106) derart angeordnet ist, dass zumindest ein Teil des Umfangs des Rollenelements durch die Installationsöffnung (403) aus der Installationsbox (106) herausragt.

9. Plattform (100) gemäß Anspruch 8,
wobei das Rollenelement (104) mittels eines Achsenelements (404) rotierbar in der Installationsbox (106) gelagert ist,
wobei das Achsenelement (404) derart in der Installationsbox (106) befestigt ist, dass das Achsenelement (404) in Richtung Installationsöffnung (403) verformbar, insbesondere elastisch verformbar, und/oder verschiebbar ist
wobei insbesondere das Achsenelement (404) mittels einer Vorspannfeder in Richtung Installationsöffnung (403) vorgespannt ist,
wobei die Installationsöffnung (403) der Installationsbox (106) in der Befestigungsfläche (103) des Grundkörpers (101) ausgebildet ist.

10. Plattform (100) gemäß einem der Ansprüche 7 bis 9,
wobei die Installationsbox (106) von der Befestigungsfläche (103) mit einem Bereich hervorragt, wobei der Bereich insbesondere eine Kuppelform (107) ausbildet,
wobei insbesondere die Installationsbox (106) einen Deckel aufweist,
wobei der Deckel insbesondere derart abnehmbar ist, dass ein Zugang zu dem Installationsvolumen bereitstellbar ist.

11. Plattform (100) gemäß einem der Ansprüche 8 bis 10, ferner aufweisend
ein Sensorelement (108), insbesondere einen Beschleunigungssensor, einen optischen Sensor, einen Positionsmeßsensor oder einen Temperatursensor, welches in der Installationsbox (106) angeordnet ist.

12. Plattform (100) gemäß einem der Ansprüche 1 bis 11, ferner aufweisend
eine Steuereinheit (405) zum Steuern der Rollenelemente,
wobei die Steuereinheit (405) zum drahtlosen Datenaustausch mit einer weiteren externen Bedieneinheit zum Erzeugen von Steuerdaten konfiguriert ist.

13. Plattform (100) gemäß einem der Ansprüche 1 bis 12, ferner aufweisend
eine Trägerstruktur mit zumindest einem elastisch verformbaren Trägerelement (501), welches derart mit dem Grundkörper (101) gekoppelt ist, dass, nach einer belastungsinduzierten Verformung des Grundkörpers (101), das Trägerelement (501) den Grundkörper (101) in eine belastungsfreie Ausgangsform zurückformt.

14. Testsystem zum Testen von Kollisionen oder kollisionsnahen Situationen zwischen einem Kollisionskörper, insbesondere einem Fahrzeug, und einem Testobjekt, das Testsystem aufweisend
eine Plattform gemäß einem der Ansprüche 1 bis 13, und
ein Testobjekt,
wobei das Testobjekt auf der Befestigungsfläche (103) mittels der Befestigungsvorrichtung (109) befestigt ist.

15. Verfahren zum Herstellen einer Plattform (100) zum Testen von Kollisionen oder kollisionsnahen Situationen zwischen einem Kollisionskörper, insbesondere einem Fahrzeug, und einem Testobjekt, das Verfahren aufweisend
Bereitstellen eines Grundkörpers (101), welcher eine Bodenfläche (102) und eine gegenüber der Bodenfläche (102) ausgebildete Befestigungsfläche (103) aufweist,
wobei auf der Befestigungsfläche (103) eine Befestigungsvorrichtung (109) ausgebildet ist zum Befestigen des Testobjekts,
Anordnen zumindest eines Rollenelements an der Bodenfläche (102) des Grundkörpers (101),
wobei das Rollenelement (104) derart ausgebildet wird, dass der Grundkörper (101) mittels des Rollenelements entlang eines Bodens (105) verfahrbar ist, wobei der Grundkörper (101) aus einem elastisch verformbaren Material mit einer Dichte unter 2500 kg/m³ ausgebildet ist,
wobei der Grundkörper (101) derart flach ausgebildet ist, dass dieser von dem Kollisionskörper überfahrbar ist, sodass sich der Grundkörper (101) verformt und mit seiner Bodenfläche (102) auf dem Boden auflegbar ist.

## Claims

1. Platform (100) for testing collisions or situations close to collisions between a collision body, in particular a vehicle, and a test object, the platform (100) comprising
a base body (101) which comprises a bottom surface (102) and an attachment surface (103) which is formed opposing to the bottom surface (102),
wherein on the attachment surface (103) an attachment device (109) is formed for attaching the test object,
at least one roller element (104) which is arranged at the bottom surface (102),
wherein the roller element (104) is configured such that the base body (101) is displaceable along a ground (105) by means of the roller element,
wherein the base body (101) is made of an elastically deformable material with a density below 2500 kg/m³,
wherein the base body (101) is configured so flat that the collision body can run over it, such that the base body (101) deforms and is placeable with its bottom surface (102) on the ground.

2. Platform (100) according to claim 1,
wherein the material comprises an elastic modulus of less than 60 GPa.

3. Platform (100) according to claim 1 or 2,
wherein the base body (101) comprises a thickness between the bottom surface (102) and the attachment surface (103) of less than 6 cm, in particular less than 5 cm.

4. Platform (100) according to one of the claims 1 to 3,
wherein the base body (101) comprises a compression strength of at least 0,9 MPa, in particular at least 1 MPa.

5. Platform (100) according to one of the claims 1 to 4,
wherein the material of the base body (101) is an organic material, in particular a wood material, a fiber composite material or a plastic material.

6. Platform (100) according to one of the claims 1 to 5,
wherein the base body (101) is made of a solid material, or
wherein the base body (101) is made of a sandwich structure,
wherein the base body (101) in particular has a triangular, a quadrangular, a circular or an oval footprint.

7. Platform (100) according to one of the claims 1 to 6, further comprising at least one of the following features:
a drive unit (401) which is configured for driving the at least one roller element (104),
wherein the drive unit (401) in particular is arranged spaced apart from the at least one roller element (104),
wherein the drive unit (401) is coupled with the roller element (104), in particular by means of a driving belt (402), by means of a gear, in particular a spur gear, and/or as a direct drive for transferring a driving force,
a steering mechanism (301) which is configured for steering the at least one roller element (104),
wherein the steering mechanism (301) in particular comprises a steering motor which is coupled with the at least one roller element (104) for steering the roller element (104), and
three roller elements which are arranged spaced apart from each other at the bottom surface (102),
wherein the roller elements are configured such that the base body (101) is displaceable along a ground (105) by means of the roller elements.

8. Platform (100) according to one of the claims 1 to 7, further comprising
an installation box (106) comprising an installation volume, which is arranged in a receiving opening of the base body (101),
wherein the installation box (106) comprises an installation opening (403) through which the installation volume is accessible from outside,
wherein the installation box (106) is made of a material which is in particular more rigid than the material of the base body (101), and
wherein the material of the installation box (106) in particular comprises a density of more than 2500 kg/m³,
wherein the installation opening (403) of the installation box (106) in particular is formed in the bottom surface (102) of the base body (101),
wherein in particular the roller element (104) is arranged in the installation box (106) such that at least a part of the circumference of the roller element is protruding out of the installation box (106) through the installation opening (403).

9. Platform (100) according to claim 8,
wherein the roller element (104) is rotatably mounted in the installation box (106) by means of an axis element (404),
wherein the axis element (404) is attached in the installation box (106) such that the axis element (404) is deformable, in particular elastically deformable, and/or displaceable, towards the installation opening,
wherein in particular the axis element (404) is preloaded by means of a preload spring towards the installation opening (403),
wherein the installation opening (403) of the installation box (106) is formed in the attachment surface (103) of the base body (101).

10. Platform (100) according to one of the claims 7 to 9,
wherein the installation box (106) is protruding from the attachment surface (103) with a region, wherein the region in particular has a dome shape (107),
wherein in particular the installation box (106) comprises a cover,
wherein the cover in particular is detachable such that an access to the installation volume is providable.

11. Platform (100) according to one of the claims 8 to 10, further comprising
a sensor element (108), in particular an acceleration sensor, an optical sensor, a position measuring sensor or a temperature sensor, which is arranged in the installation box (106).

12. Platform (100) according to one of the claims 1 to 11, further comprising
a control unit (405) for controlling the roller elements,
wherein the control unit (405) is configured for wireless data exchange with a further external operating unit for generating control data.

13. Platform (100) according to one of the claims 1 to 12, further comprising
a support structure with at least one elastically deformable support element (501) which is coupled with the base body (101) such that, subsequent to a stress-induced deformation of the base body (101), the support element (501) forms the base body (101) back to a stress-free initial shape.

14. Test system for testing collisions or situations close to collisions between a collision body, in particular a vehicle, and a test object, the test system comprising
a platform according to one of the claims 1 to 13, and
a test object,
wherein the test object is attached on the attachment surface (103) by means of the attachment device (109).

15. Method of manufacturing a platform (100) for testing collisions or situations close to collisions between a collision body, in particular a vehicle, and a test object, the method comprising
providing a base body (101) which comprises a bottom surface (102) and an attachment surface (103) which is formed opposing to the bottom surface (102),
wherein on the attachment surface (103) an attachment device (109) is formed for attaching the test object,
arranging at least one roller element at the bottom surface (102) of the base body (101),
wherein the roller element (104) is being configured such that the base body (101) is displaceable along a ground (105) by means of the roller element,
wherein the base body (101) is made of an elastically deformable material with a density below 2500 kg/m³,
wherein the base body (101) is formed so flat that the collision body can run over it, such that the base body (101) deforms and is placeable with its bottom surface (102) on the ground.

## Revendications

1. Plateforme (100) pour tester des collisions ou situations proches de collisions entre un corps de collision, en particulier un véhicule, et un objet de test, la plateforme (100) présentant
un corps de base (101), lequel présente une surface de sol (102) et une surface de fixation (103) réalisée en regard de la surface de sol (102),
**caractérisée en ce qu'**un dispositif de fixation (109) est réalisé sur la surface de fixation (103) pour fixer l'objet de test,
au moins un élément de roulement (104), lequel est disposé sur la surface de sol (102),
dans laquelle l'élément de roulement (104) est réalisé de telle sorte que le corps de base (101) est déplaçable le long d'un sol (105) au moyen de l'élément de roulement,
dans laquelle le corps de base (101) est réalisé à partir d'un matériau élastiquement déformable avec une densité inférieure à 2500 kg/m³,
dans laquelle le corps de base (101) est réalisé de manière plate, de telle sorte que celui-ci peut être parcouru par le corps de collision, de sorte que le corps de base (101) se déforme et peut être posé sur le sol avec sa surface de sol (102).

2. Plateforme (100) selon la revendication 1,
**caractérisée en ce que** le matériau présente un module d'élasticité inférieur à 60 GPa.

3. Plateforme (100) selon la revendication 1 ou 2,
**caractérisée en ce que** le corps de base (101) présente une épaisseur entre la surface de sol (102) et la surface de fixation (103) inférieure à 6 cm, en particulier inférieure à 5 cm.

4. Plateforme (100) selon l'une quelconque des revendications 1 à 3,
**caractérisée en ce que** le corps de base (101) présente une résistance à la compression d'au moins 0,9 MPa, en particulier d'au moins 1 MPa.

5. Plateforme (100) selon l'une quelconque des revendications 1 à 4,
**caractérisée en ce que** le matériau du corps de base (101) est un matériau organique, en particulier un matériau en bois, un matériau composite renforcé par des fibres ou une matière plastique.

6. Plateforme (100) selon l'une quelconque des revendications 1 à 5,
**caractérisée en ce que** le corps de base (101) est fabriqué à partir d'un matériau massif, ou
dans laquelle le corps de base (101) est fabriqué à partir d'une structure sandwich,
dans laquelle le corps de base (101) réalise en particulier un plan triangulaire, un carré, un rond ou un ovale.

7. Plateforme (100) selon l'une quelconque des revendications 1 à 6, présentant en outre au moins une des caractéristiques suivantes :
une unité d'entraînement (401), laquelle est réalisée pour entraîner au moins un élément de roulement (104),
**caractérisée en ce que** l'unité d'entraînement (401) est disposée en particulier à distance d'au moins un élément de roulement (104),
dans laquelle l'unité d'entraînement (401) est accouplée en particulier au moyen d'une courroie d'entraînement (402), au moyen d'une transmission par engrenage, en particulier d'un engrenage cylindrique à denture droite et/ou en tant qu'entraînement direct à l'élément de roulement (104) pour la transmission d'une force d'entraînement
un mécanisme de direction (301), lequel est réalisé pour diriger au moins un élément de roulement (104),
dans laquelle le mécanisme de direction (301) présente en particulier un moteur de direction, lequel est accouplé à au moins un élément de roulement (104), afin de diriger l'élément de roulement (104), et
trois éléments de roulement, lesquels sont disposés de manière espacée sur la surface de sol (102),
dans laquelle les éléments de roulement sont réalisés de telle sorte que le corps de base (101) peut être déplacé le long d'un sol (105) au moyen des éléments de roulement.

8. Plateforme (100) selon l'une quelconque des revendications 1 à 7, présentant en outre
une boîte d'installation (106) présentant un volume d'installation, laquelle est disposée dans une ouverture de logement du corps de base (101),
**caractérisée en ce que** la boîte d'installation (106) présente une ouverture d'installation (403), par laquelle le volume d'installation est accessible de l'extérieur,
dans laquelle la boîte d'installation (106) est réalisée à partir d'un matériau, lequel est en particulier plus rigide que le matériau du corps de base (101), et
dans laquelle le matériau de la boîte d'installation (106) présente en particulier une densité supérieure à 2500 kg/m³,
dans laquelle l'ouverture d'installation (403) de la boîte d'installation (106) est réalisée en particulier dans la surface de sol (102) du corps de base (101),
dans laquelle en particulier l'élément de roulement (104) est disposé dans la boîte d'installation (106) de telle sorte qu'au moins une partie de la périphérie de l'élément de roulement fait saillie de la boîte d'installation (106) par l'ouverture d'installation (403).

9. Plateforme (100) selon la revendication 8,
**caractérisée en ce que** l'élément de roulement (104) est monté en rotation dans la boîte d'installation (106) au moyen d'un élément axial (404),
dans laquelle l'élément axial (404) est fixé dans la boîte d'installation (106) de telle sorte que l'élément axial (404) peut être déformé en direction de l'ouverture d'installation (403), en particulier peut être déformé de manière élastique, et/ou peut se déplacer
dans laquelle en particulier l'élément axial (404) est précontraint en direction de l'ouverture d'installation (403) au moyen d'un ressort de précontrainte,
dans laquelle l'ouverture d'installation (403) de la boîte d'installation (106) est réalisée dans la surface de fixation (103) du corps de base (101).

10. Plateforme (100) selon l'une quelconque des revendications 7 à 9,
**caractérisée en ce que** la boîte d'installation (106) fait saillie de la surface de fixation (103) avec une zone, dans laquelle la zone réalise en particulier une forme de coupole (107),
dans laquelle en particulier la boîte d'installation (106) présente un couvercle,
dans laquelle le couvercle peut en particulier être retiré, de telle sorte qu'un accès au volume d'installation peut être fourni.

11. Plateforme (100) selon l'une quelconque des revendications 8 à 10, présentant en outre
un élément capteur (108), en particulier un capteur d'accélération, un capteur optique, un capteur de mesure de position ou un capteur de température, lequel est disposé dans la boîte d'installation (106).

12. Plateforme (100) selon l'une quelconque des revendications 1 à 11, présentant en outre
une unité de commande (405) pour la commande des éléments de roulement,
**caractérisée en ce que** l'unité de commande (405) est configurée pour l'échange de données sans fil avec une autre unité de commande externe pour produire des données de commande.

13. Plateforme (100) selon l'une quelconque des revendications 1 à 12, présentant en outre
une structure de support avec au moins un élément de support (501) déformable élastiquement, lequel est accouplé au corps de base (101) de telle sorte que, après une déformation du corps de base (101) induite par une sollicitation, l'élément de support (501) ramène le corps de base (101) dans une forme de départ exempte de sollicitation.

14. Système de test pour tester des collisions ou des situations proches de collisions entre un corps de collision, en particulier un véhicule, et un objet de test, le système de test présentant
une plateforme selon l'une quelconque des revendications 1 à 13, et
un objet de test,
**caractérisé en ce que** l'objet de test est fixé sur la surface de fixation (103) au moyen du dispositif de fixation (109).

15. Procédé pour fabriquer une plateforme (100) pour tester des collisions ou des situations proches de collisions entre un corps de collision, en particulier un véhicule, et un objet de test, le procédé présentant
la fourniture d'un corps de base (101), lequel présente une surface de sol (102) et une surface de fixation (103) réalisée en regard de la surface de sol (102),
**caractérisé en ce qu'**un dispositif de fixation (109) est réalisé sur la surface de fixation (103) pour fixer l'objet de test,
la disposition d'au moins un élément de roulement sur la surface de sol (102) du corps de base (101),
dans lequel l'élément de roulement (104) est réalisé de telle sorte que le corps de base (101) est déplaçable le long d'un sol (105) au moyen de l'élément de roulement,
dans lequel le corps de base (101) est réalisé à partir d'un matériau élastiquement déformable avec une densité inférieure à 2500 kg/m³,
dans lequel le corps de base (101) est réalisé de manière plate, de telle sorte que celui-ci peut être parcouru par le corps de collision, de sorte que le corps de base (101) se déforme et peut être posé sur le sol avec sa surface de sol (102).
